# Europäisches Patentamt
# European Patent Office
# Office européen des brevets

(11) Publication number: **0 242 085**
**B1**

(12) **EUROPEAN PATENT SPECIFICATION**

(45) Date of publication of patent specification: **23.01.91**

(21) Application number: **87302844.3**

(22) Date of filing: **01.04.87**

(51) Int. Cl.⁵: **B 60 T 13/40**

(54) **Compressed air-operated servo-booster.**

(30) Priority: **12.04.86 GB 8608965**

(43) Date of publication of application:
**21.10.87 Bulletin 87/43**

(45) Publication of the grant of the patent:
**23.01.91 Bulletin 91/04**

(84) Designated Contracting States:
**DE FR GB IT**

(56) References cited:
**DE-A-2 453 866**

(73) Proprietor: **LUCAS INDUSTRIES public limited
company**
**Great King Street**
**Birmingham, B19 2XF West Midlands (GB)**

(72) Inventor: **Reynolds, Desmond Henry James**
**156 Tamworth Road**
**Sutton Coldfield West Midlands (GB)**
Inventor: **Powell, Michael Thomas**
**41 Orchard Croft**
**Barnt Green Birmingham B45 8NJ (GB)**

(74) Representative: **Waite, Anthony William et al**
**MARKS & CLERK Alpha Tower Suffolk Street**
**Queensway**
**Birmingham B1 1TT (GB)**

Courier Press, Leamington Spa, England.

## Description

This invention relates to a compressed air-operated servo-booster, primarily for use in a vehicle hydraulic braking systems for the purpose of providing power assistance in the actuation of a brake master cylinder, and having a housing divided by a movable partition into two chambers, one of which is subject to low, normally atmospheric pressure, and valve means actuated, for example, by movement of a driver-operated pedal, controls the supply of compressed air to the other chamber such that the partition is either balanced by equal pressures on either side thereof, and thereby rendered inoperative, or urged by pressure differential to provide power assistance for a braking operation.

Such servo-boosters of which an example is illustrated in GB-A-1456929 (equivalent to DE-A-2453866), installed in vehicles are normally used with a compressed air pump driven from the vehicle engine, the pump charging a reservoir with compressed air which is supplied to the high pressure chamber of the servo during braking operations. An object of the invention is to provide a compressed air-operated servo-booster of compact dimensions and having improved structural and operational features compared with some conventional boosters such as that illustrated in GB-A-1456929.

According to the invention, a compressed air-operated servo-booster comprises a housing formed by a pair of shells connected together in a peripheral region thereof, the housing being divided by a movable partition into two chambers, one of which is subject to low pressure, valve means actuated by a force input member to control the supply of compressed air to the other chamber for the purpose of applying a power assistance force to an output member connected, in use, to a brake actuator, characterised by a reservoir element attached to the housing in the region of the connection between said shells and arranged to define between itself and part of the housing a compressed air reservoir generally concentric with said partition and through which an output rod extends for operation of said actuator, and in that a generally radially extending axially facing wall of the reservoir carries means for the attachment thereto of a brake actuator to be operated by the output rod so that actuating forces from said actuator are sustained by said reservoir wall.

The reservoir may conveniently be of generally annular form, and is preferably arranged coaxially with said movable partition. The reservoir may then have an internal diameter such as to permit a rearwardly extending generally cylindrical portion of a brake actuator to be housed therein. The external diameter of the reservoir may conveniently be substantially the same as that of the housing.

Preferably, a return spring for the movable partition is arranged to resist unwanted rotation of the partition. For this purpose, the respective ends of the spring may conveniently be anchored to the reservoir and to a power piston associated with the partition.

The invention will now be described, by way of example, with reference to the accompanying drawings in which:

Figure 1 is a longitudinal cross section of one form of the servo-booster of the invention, and

Figures 2 and 3 are views similar to Figure 1 illustrating respectively alternative embodiments of the servo-booster of the invention.

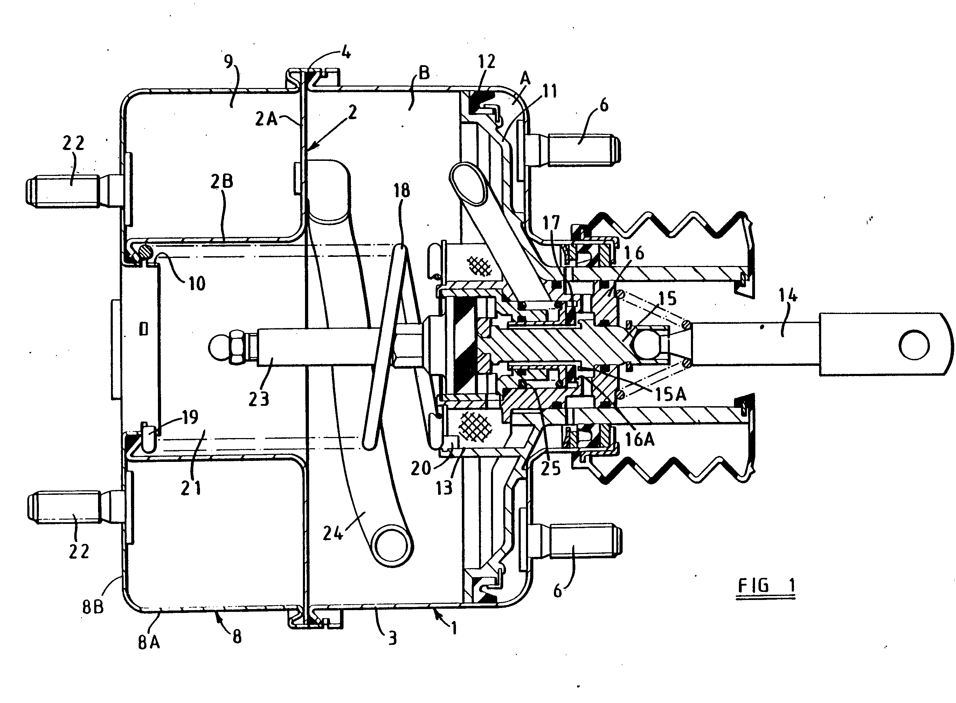

The servo-booster illustrated in Figure 1 of the drawings has a housing 1 composed of front and rear shell portions 2 and 3 which are joined around their outer peripheries at 4. The housing 1 is provided with rearwardly projecting mounting studs 6 serving to mount the booster on a fixed support, such as a vehicle bulk head. The shell portion 2 includes an annular generally radial part 2A and an axially extending cylindrical reduced diameter portion 2B. Surrounding the reduced diameter shell portion 2B is a further shell portion 8 which, together with the front shell portion 2, defines an enclosed reservoir 9 for compressed air. An axially extending part 8A of the shell portion 8 is secured to the shell portions 2 and 3 at the location of the joint 4 between the latter. A radially extending part 8B of the shell portion 8 has an in-turned co-axial hollow cylindrical part 10 which lies within the reduced diameter part 2B of the shell 2 and forms a connection with said part 2B.

The interior of the housing 1 is divided into two chambers A, B by a power piston assembly which includes a piston 11 slidable against the internal wall of the shell portion 3, being sealed thereagainst by a flexible seal 12. The piston assembly also includes a central axially extending hollow hub 13 which extends outwardly through the rear of the casing and receives a force input rod 14 which is connected to a valve piston 15 housed within the hub and supported by a valve member 16 of the hub, the piston 15 and member 16 providing respective seats 15A and 16A for cooperation with a valve member 17 in conventional manner.

The power piston assembly is urged to the right, as seen in the drawing, by a return spring 18 acting between the hub 13 and the cylindrical part 2B of the shell portion 2. The forward end of the spring 18 is bent to form a radially inwardly projecting retention lug 19 which engages in a hole or slot formed in the in-turned co-axial hollow cylindrical part 10 of the shell portion 8 in order to lock the spring against rotation. The spring is non-rotatably connected at its other end to the hub 13 of the power piston by means of an axially projecting portion 20 of the spring engaged in a suitable aperture of the hub and this enables the spring to resist rotation of the power piston relative to the housing.

An opening 21 through the reservoir is defined by the cylindrical wall portion 2B and would normally contain a rearwardly extending part of a master cylinder, (not shown) of which a mounting flange would be secured to studs 22 projecting from the radially extending part 8B of the shell portion 8. An output rod 23 of the booster would then be in operative relationship with a piston of the master cylinder. The shell portion 8 contributes significantly to the overall strength of the booster housing and the shell part 8B provides an advantageous location for attachment of the master cylinder and reaction of the actuation forces arising on the latter. The reservoir 9 would normally be supplied with compressed air from a suitable source such as a pump mounted on the vehicle and the reservoir is connected by a flexible pipe 24 to a space 25 within the hub 13, from which it can be fed, when desired, by operation of the valves 15A, 16A to the chambers A and B of the housing 1, in conventional manner. The resistance to rotation of the hub referred to above avoids the possibility of the flexible pipe 24 becoming wound around the hub which could result in pinching the pipe.

The attachment of the shell 8 to the shells 2 and 3 not only conveniently forms the reservoir, but also provides additional resistance against axial actuation loads, such as those arising during operation of the booster, applied to the master cylinder securing studs 22. The cylindrical part 2B of the shell 2 can thus be seen to perform a function similar to the tie rods found in some conventional master cylinders and minimises the gauge of material required for the various parts of the housing, thereby resulting in a cost effective assembly. Cost effectiveness is further increased by securing the shells 2, 3 and 8 together at a common location. The shell 2 also acts to resist any tendency for the booster to increase in length, due to deformation of the casing, when high pressure is applied to the reservoir 9, and thus provides a stabilising effect during operation of the reservoir.

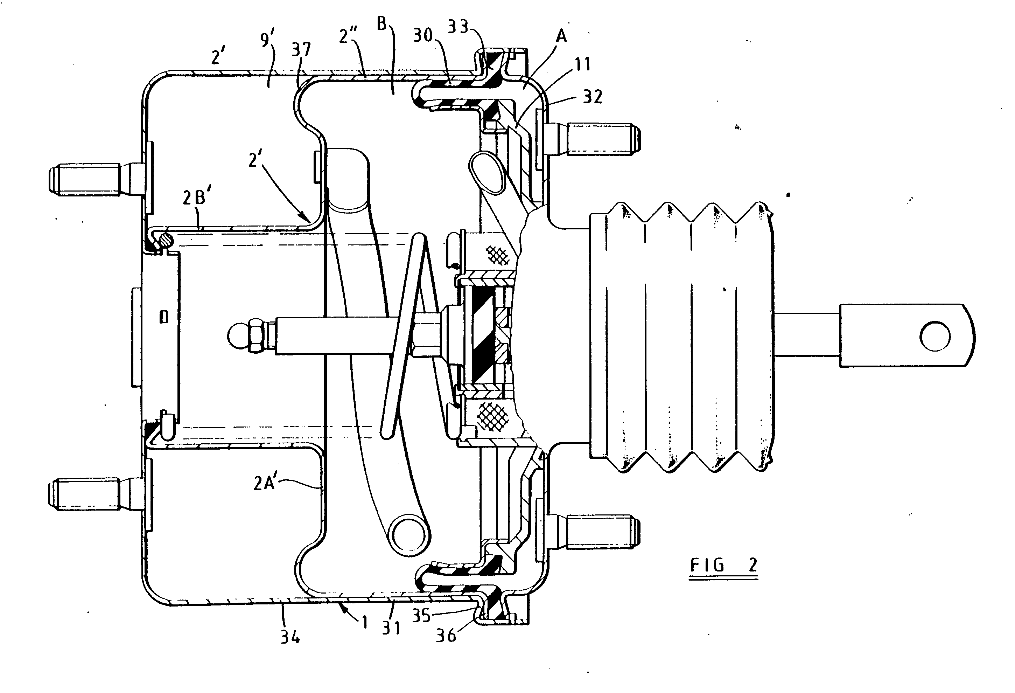

Figure 2 illustrates an alternative form of the booster of the invention, in which the piston 11 no longer slides against an internal wall of the booster shell, but is sealed to this shell by means of a deformable diaphragm 30, the ends of which are sealingly secured respectively to the piston 11 and the housing 1. In this embodiment, the housing proper 1 consists of front and rear shells 2' and 32 defining the booster chambers A, B and co-operating to trap a bead 33 of the seal. An additional shell 34 co-operates with radial and axial wall portions 2A' and 2B' of the shell 2' to define the reservoir 9'. An axially rearwardly extending portion 31 of the shell 34 provides a shoulder 35 to retain an out-turned flange 36 of the front shell 2'. It will be seen that the booster housing and reservoir are attached together at a single location, providing a compact and cost effective assembly. The radial wall portion 2A' connects with the axial wall portion 2B' by way of an arcuate part 37 which provides additional strength to the shell 2' and encloses the working length of the diaphragm 30. In all other constructional and operational respects, the booster of Figure 2 is similar to that illustrated in Figure 1.

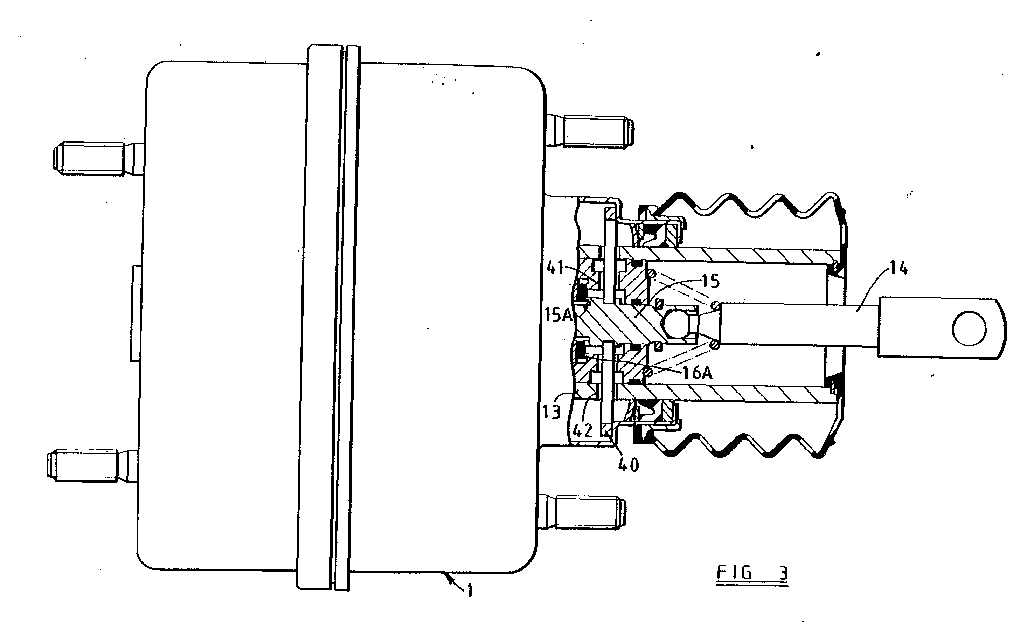

In the embodiments of Figure 3, the housing 1 and reservoir 20 are constructed in similar manner to the embodiment of Figure 1, except that the control piston 15 carries an abutment key 40 which extends with clearance at either side thereof through aligned apertures 41, 42 in the hub 13. The key member 40 abuts the housing, as shown, to set a fixed retracted position for the valve piston 15, and the clearance provided at the apertures 41, 42 enables the piston 15 to move in controlled manner relative to the power piston 11 when the ring 40 is in abutment with the housing. This enables the valves 15A, 16A to co-operate in a manner such as to control the balance of pressures in the chambers A, B whereby the booster is maintained in a condition of readiness when in its rest position such that substantially instantaneous operation occurs upon actuation of the force input rod 14.

It will be understood that the valve mechanism of the booster of the invention may take any convenient alternative form to that illustrated in the drawing whilst retaining the features of Claim 1. The reservoir may be of any convenient shape and size other than that illustrated. Although the low pressure existing in one of the booster chambers will normally be atmospheric, low pressure derived from another source is not precluded.

## Claims

1. A compressed air-operated servo-booster comprising a housing formed by a pair of shells (2, 3) connected together in a peripheral region (4) thereof, the housing being divided by a movable partition (11) into two chambers (A, B), one of which is subject to low pressure, valve means (15A, 16A, 17) actuated by a force input member (14) to control the supply of compressed air to the other chamber for the purpose of applying a power assistance force to an output member connected, in use, to a brake actuator, characterised by a reservoir element (8) attached to the housing in the region (4) of the connection between said shells and arranged to define between itself and part of the housing a compressed air reservoir (9) generally concentric with said partition and through which an output rod (23) extends for operation of said actuator, and by a generally radially extending axially facing wall (8B) of the reservoir which carries means (22) for the attachment thereto of a brake actuator to be operated by the output rod (23) so that actuating forces from said actuator are sustained by said reservoir wall.

2. A servo-booster according to Claim 1, characterised in that said attachment means comprises one or more studs (22) projecting axially from said wall (8B).

3. A servo-booster according to Claim 1 or Claim 2, characterised in that the external diameter of the reservoir (9) is substantially the same as that of the housing (1, 2).

4. A servo-booster according to any one of the preceding claims characterised in that the reservoir (9) is generally annular and defines an opening (21) therethrough into which, in use, extends part of said actuator for actuation by the rod (23).

5. A servo-booster according to any one of Claims 1 to 4, characterised in that the part of the housing (2) defining the reservoir with the reservoir element (8) has a radially extending wall (2A) attached to the shell (1) at the region (4) and a generally cylindrical axially extending wall (2B) through which the rod (23) extends, and the reservoir element (8) has an axially extending generally cylindrical wall portion (8A) concentric with the wall (2B) and secured to the shells (1, 2) at the peripheral region (4), and a generally radially extending wall portion (8B) carrying said means (22) for the attachment thereto of said actuator.

6. A servo-booster according to any one of the preceding claims characterised in that the movable partition is a piston (11) slidable within a cylindrical part of the housing shell (3), the peripheral connecting region (4) between the shells (2, 3) and element (8) being forwardly of the extremity of the piston working travel.

7. A servo-booster according to any one of Claims 1 to 6, characterised in that the connection between the shells is rearwardly of the partition and the reservoir element (34) overlies a cylindrical part (2'') of the shell (2').

8. A servo-booster according to Claim 7, characterised in that the partition comprises a piston (11) and a diaphragm (30) connected between an outer peripheral region of the piston and the housing, the diaphragm being applied against the shell (2'') during working travel of the partition.

9. A servo-booster according to any one of the preceding claims comprising a power piston assembly (13, 15) which includes a hub (13) movable with the partition (11) and a valve piston (15) slidably mounted in the hub and carrying an abutment key (40) extending with clearance through apertures (41, 42) of the hub and being arranged to abut the housing (1) to set a fixed retracted position for the valve piston whilst permitting limited movement of the hub relative to said piston.

10. A servo-booster according to any one of the preceding claims characterised in that a return spring (18) for the movable partition (11) is arranged to resist unwanted rotation of the partition.

11. A servo-booster according to Claim 10, characterised in that the respective ends of the spring (18) are anchored to a part (10) of the reservoir and to a hub (13) of a power piston assembly associated with the partition (11).

**Patentansprüche**

1. Druckluftbetätigter Servoverstärker mit einem aus einem Paar von miteinander an einem umlaufenden Bereich (4) davon verbundenen Hüllen (2, 3) gebildeten Gehäuse, wobei das Gehäuse durch eine bewegbare Unterteilung (11) in zwei Kammern (A, B) unterteilt ist, von denen eine niedrigem Druck ausgesetzt ist, einer durch ein Kraft- übertragungsteil (14) betätigten Ventileinrichtung (15A, 16A, 17) zum Steuern der Zufuhr von Druckluft zu der anderen Kammer zum Anlegen einer Leistungshilfskraft an ein in Benutzung mit einem Bremsbetätiger verbundenes Ausgangsteil, gekennzeichnet durch ein an dem Gehäuse in dem Bereich (4) der Verbindung zwischen den Hüllen so angeordnetes Speicherelement (8), das zwischen ihm selbst und einem Teil des Gehäuses ein im allgemeinen konzentrisch mit der Unterteilung gebildeter Druckluftspeicher (9) abgegrenzt ist, durch den sich eine Ausgangsstange (23) zum Betätigen des Betätigers erstreckt, und durch eine sich radial erstreckende der Achse zugewandte Wand (8B) des Speichers, die eine Einrichtung (22) zum daran Befestigen eines Bremsbetätigers trägt, der durch die Ausgangsstange (23) so zu betätigen ist, daß die Betätigungskräfte von dem Betätiger durch die Speicherwand ausgehalten werden.

2. Servoverstärker nach Anspruch 1, dadurch gekennzeichnet, daß die Befestigungseinrichtung einen oder mehrere sich axial von der Wand (8B) erstreckende Vorsprünge aufweist.

3. Servoverstärker nach Anspruch 1 oder 2, dadurch gekennzeichnet, daß der äußere Durchmesser des Speichers (9) im wesentlichen der gleiche wie der des Gehäuses (1, 2) ist.

4. Servoverstärker nach einem der vorhergehenden Ansprüche, dadurch gekennzeichnet, daß der Speicher im allgemeinen ringförmig ist und eine Öffnung (21) dadurch abgegrenzt, in die bei der Benutzung sich ein Teil des Betätigers zur Betätigung der Stange (23) erstreckt.

5. Servoverstärker nach einem der Ansprüche 1 bis 4, dadurch gekennzeichnet, daß das Teil des Gehäuses (2), das den Speicher zusammen mit dem Speicherelement (8) abgrenzt, eine sich radial erstreckende Wand (2A), die an der Hülle (1) an dem Bereich (4) angebracht ist, und eine sich im allgemeinen zylindrisch radial erstreckende Wand (2B), durch die sich die Stange (23) erstreckt, aufweist, und daß das Speicherelement (8) einen sich axial erstreckenden im allgemeinen zylindrischen Wandabschnitt (8A), der konzentrisch mit der Wand (2B) gebildet ist und an den Hüllen (1, 2) an dem umlaufenden Abschnitt (4) befestigt ist, und einen sich im allgemeinen radial erstreckenden Wandabschnitt (8B), der die Einrichtung (22) zum daran Befestigen des Betätigers trägt, aufweist.

6. Servoverstärker nach einem der vorhergehenden Ansprüche, dadurch gekennzeichnet, daß die bewegbare Unterteilung ein verschiebbar in dem zylindrischen Teil der Gehäusehülle (3) vorgesehender Kolben (11) ist, wobei der umlaufende Verbindungsbereich (4) zwischen den Hüllen (2, 3) und dem Element (8) vor der äußersten position des Kolbenarbeitshubes vorgesehen ist.

7. Servoverstärker nach einem der Ansprüche 1 bis 6, dadurch gekennzeichnet, daß die Verbindung zwischen den Hüllen nach hinten von der Unterteilung vorgesehen ist und das Speicherelement (34) über einem zylindrischen Teil (2'') der Hülle (2') liegt.

8. Servoverstärker nach Anspruch 7, dadurch gekennzeichnet, daß die Unterteilung ein in Kolben (11) und ein zwischen einem äußeren umlaufenden Bereich des Kolbens und dem Gehäuse verbundenen Diaphragma (30) aufweist, wobei das Diaphragma an der Hülle (2'') während des Arbeitshubes der Unterteilung anliegt.

9. Servoverstärker nach einem der vorhergehenden Ansprüche, mit einer Kraftkolbenanordnung (13, 15), die eine mit der Unterteilung bewegbare Nabe (13) aufweist, und einem verschiebbar in der Nabe angebrachten Ventilkolben (15), der einen Anschlagkeil (40) trägt, der sich mit einem Zwischenraum durch Öffnungen (41, 42) der Nabe erstreckt, und zum Anstoßen gegen das Gehäuse (1) angeordnet ist, so daß eine feste zurückgezogene Position für den Ventilkolben eingestellt ist, während eine begrenzte Bewegung der Nabe relativ zu dem Kolben ermöglicht ist.

10. Servoverstärker nach einem der vorhergehenden Ansprüche, dadurch gekennzeichnet, daß eine Rückholfeder (18) für die bewegbare Unterteilung (11) zum Gegenwirken gegen eine unerwünschte Drehung der Teilung vorgesehen ist.

11. Servoverstärker nach Anspruch 10, dadurch gekennzeichnet, daß die entsprechenden Enden der Feder (18) an einem Teil (10) des Speichers bzw. an einer Nabe (13) der Kraftkolbenanordnung, die mit der Unterteilung (11) zusammenwirkt, befestigt sind.

**Revendications**

1. Vérin hydraulique à air comprimé de direction comprenant un carter formé par une paire de coques (2, 3) reliées ensemble dans une zone (4) de leur périphérie, le carter étant divisé par une séparation mobile (11) en deux chambres (A, B), dont une est soumise à une basse pression, des moyens formant soupape (15A, 16A, 17) actionnés par un organe d'entrée de force (14) pour commander l'alimentation en air comprimé dans l'autre chambre afin d'exercer une force de servo-direction à un organe de sortie relié, en fonctionnement, à un actionneur de frein, caractérisé par un élément formant réservoir (8) fixé au carter dans la zone (4) de liaison entre lesdites coques et disposé de manière à définir entre lui et une partie du carter un réservoir d'air comprimé (9) généralement concentrique avec ladite séparation et à travers lequel s'avance un piston de sortie (23) pour faire fonctionner ledit actionneur, et par une paroi du réservoir s'étendant radialement et faisant face axialement (8B), de manière générale, ladite paroi portant des moyens (22) permettant la fixation d'un actionneur de frein qui doit être actionné par le piston de sortie (23), de sorte que des forces d'actionnement générées par ledit actionneur sont reçues par ladite paroi de réservoir.

2. Vérin hydraulique de direction selon la revendication 1, caractérisé en ce que lesdits moyens de fixation comportent un ou plusieurs goujons (22) s'avançant axialement depuis ladite paroi (8B).

3. Vérin hydraulique de direction selon la revendication 1 ou la revendication 2, caractérisé en ce que le diamètre extérieur du réservoir (9), est sensiblement le même que celui du carter (1, 2).

4. Vérin hydraulique de direction selon l'une des revendications précédentes, caractérisé en ce que le réservoir (9) est généralement annulaire et définit une ouverture (21) à travers lui, dans laquelle une partie dudit actionneur s'étend, en fonctionnement, pour un actionnement par le piston (23).

5. Vérin hydraulique selon l'une des revendications 1 à 4, caractérisé en ce que la partie du carter (2) définissant le réservoir avec l'élément formant réservoir (8) comporte une paroi s'étendant radialement (2A) fixée à la coque (1) à l'endroit de la zone (4) et une paroi généralement cylindrique s'étendant axialement (2B) à travers laquelle s'étend le piston (23), et en ce que l'élément formant réservoir (8) a une paroi généralement cylindrique s'étendant axialement (8A) concentrique avec la paroi (2B) et fixée aux coques (1, 2) à l'endroit de la zone périphérique (4), et une partie de paroi s'étendant généralement radialement (8B) portant lesdits moyens (22) permettant de fixer ledit actionneur à cet endroit.

6. Vérin hydraulique selon l'une des revendications précédentes, caractérisé en ce que la séparation mobile est un piston (11) coulissant à l'intérieur d'une partie cylindrique de la coque formant carter (3), la zone de liaison périphérique (4) entre les coques (2, 3) et l'élément (8) se trouvant à l'avant par rapport à l'extrémité de la course de travail du piston.

7. Vérin hydraulique selon l'une des revendications 1 à 6, caractérisé en ce que la liaison entre les coques se trouve à l'arrière de la séparation et en ce que l'élément formant réservoir (34) recouvre une partie cylindrique (2'') de la coque (2').

8. Vérin hydraulique de direction selon la revendication 7, caractérisé en ce que la séparation comprend un piston (11) et un diaphragme (30) montés entre une zone périphérique extérieure du piston et le carter, le diaphragme étant appliqué contre la coque (2'') durant la course de travail de la séparation.

9. Vérin hydraulique de direction selon l'une des revendications précédentes comprenant un ensemble de piston d'alimentation (13, 15) qui comprend un moyeu (13) mobile avec la séparation (11) et un piston à soupape (15) monté de manière coulissante dans le moyeu et portant une cale de butée (40) s'étendant avec du jeu à travers des ouvertures (41, 42) du moyeu et étant montée pour venir en butée contre le carter (1) afin de définir une position rétractée fixe pour le piston à soupape tout en permettant un mouvement limité du moyeu par rapport audit piston.

10. Vérin hydraulique de direction selon l'une des revendications précédentes, caractérisé en ce qu'un ressort de rappel (18) pour le rappel de la séparation mobile (11) est monté de manière à empêcher une rotation indésirable de la séparation.

11. Vérin hydraulique de direction selon la revendication 10, caractérisé en ce que les extrémités respectives du ressort (18) sont ancrées à une partie (10) du réservoir et à un moyeu (13) d'un ensemble de piston d'alimentation associé à la séparation (11).

FIG 1

FIG 2

EP 0 242 085 B1

2

FIG 3

EP 0 242 085 B1